# EUROPEAN PATENT SPECIFICATION

(11) **EP 3 106 855 B1**
(45) Date of publication and mention of the grant of the patent: **29.11.2017**
(21) Application number: 16173583.2
(22) Date of filing: 08.06.2016
(51) Int. Cl.: G01M 5/00, A63C 11/26, B25H 1/00

(54) **A MEASURING DEVICE OF A SKI**
MESSVORRICHTUNG FÜR EINEN SKI
DISPOSITIF DE MESURE D'UN SKI

(30) Priority: 17.06.2015 IT UB20151455
(43) Date of publication of application: 21.12.2016
(73) Proprietor: SVECOM - P.E. S.R.L., 36075 Montecchio Maggiore VI (IT)
(72) Inventor: MARIN, Mirco, 36073 Montecchio Maggiore (VI) (IT)
(74) Representative: Trentin, Michele

(56) References cited:
- Stefan Schwanitz ET AL: "Development of a low-cost ski edge pressure test bench", , 16 March 2015 (2015-03-16), XP055265585, DOI: 10.13140/RG.2.1.3533.5206 Retrieved from the Internet: URL:https://researchgate.net/publication/2 73577048 [retrieved on 2016-04-14]
- NICOLA PETRONE: "The use of an Edge Load Profile static bench for the qualification of alpine skis", PROCEDIA ENGINEERING, vol. 34, 1 January 2012 (2012-01-01), pages 385-390, XP055265590, AMSTERDAM, NL ISSN: 1877-7058, DOI: 10.1016/j.proeng.2012.04.066

## Description

### Field of the invention

The present invention is generally applicable to the field of sport equipment, and it particularly relates to skis.

More in detail, the present invention relates to a measuring device of a ski in accordance with claim 1.

### Background of the invention

In the field of winter sports, a relevant aspect is the measurement of the curvature and of the stiffness of the skis.

As known, skis are long and flat tools used to slide on the snow. The ability of sliding thereof depends on various parameters among which their stiffness and the sliding degree of the bottom thereof on the snow.

The latter is favoured or, anyway, influenced not only by the use of special shaping of the bottom, but also by the application thereon of waxes or paraffins usually indicated with the term "ski-wax".

Indeed, it is known that the ski is pre-treated with ski-waxes substantially of two types depending on the use. There are sliding ski-waxes, that allow the ski to better slide on the snow, and friction ski-waxes that allow the skier to press on the ski and to push forward even with the feet. However, both such types of ski-wax differ in a plurality of products that allow a better adaptation of the ski to the snow conditionally to the physical features of the latter as well as to the type of snow thereof.

Therefore, it is evident that in order to ensure to the user the best performance of the ski, it is essential to know the physical features thereof not only in length and width, but also in flexing stiffness as well as in the arc of curvature kept by the skis when the user wears them in order to determine the points of application of the ski-wax and the amount of the ski-wax thereof to be applied.

Moreover, it is noted that, even if produced industrially, each ski has features slightly different from the others, thus other relevant aspects are the search for a pair of skis with features congruent therebetween as well as, in case the user has a good experience in the use thereof, the search for further pairs of skis having similar features.

At first, in the prior art, the task was given exclusively to qualified personnel who physically evaluated the skis with manual tools, who evaluated the snow and who proceeded ,on the basis of the experience, with the choice of the skis as well as of the application of the ski-wax. It is evident that the outcome was completely entrusted to the experience of the qualified personnel and, anyway, it was strongly subjected to mistakes and inaccuracies.

Therefore, devices are known (see for instance *S*. *Schwanitz et al.,* "Development of a low-cost ski edge pressure test bench" and *N. Petrone,* "The use of an edge load profile static bench for the qualification of alpine skis") for the detection of the mechanical features of the ski and of the degree of curvature thereof in order to determine which is the part to be ski-waxed and with which thickness. Such devices have one or more mechanical sensors that are arranged in contact with the base of the ski to detect the degree of curvature thereof. They further comprise mechanical actuators to subject the ski on the upper part to a perpendicular load in order to simulate the user who wears them.

Such known devices allow to overcome the above mentioned drawbacks since both the detection of the mechanical features of the ski and the detection of the points of ski-waxing occurs with precision and is not subjected to human mistake.

However, the detection is discrete being the sensors static with respect to the base of the ski. This results in a not precise and accurate detection.

Therefore, measuring devices are known that provide for the movement of the mechanical sensors along the base of the ski, but they carry the risk of partially removing the ski-wax after the application thereof in the points of detection during the control of the obtained result. Such a risk, even if spatially limited, is also present in the detection devices with static sensors.

### Summary of the invention

Object of the present invention is to at least partially overcome the above mentioned drawbacks, by providing a measuring device of a ski that allows to precisely detect the physical features thereof, in particular the flexing stiffness and the degree of curvature, in order to define the points of ski-waxing.

Another object is to provide a measuring device of a ski that allows to correctly simulate the response thereof to the specific user who has to use it so as to optimize the ski-wax to be applied.

A further object of the invention is to provide a measuring device of a ski that allows to precisely measure the curvature thereof without the risk of ruining the ski-wax applied.

Such objects, as well as others which will appear more clearly hereinafter are fulfilled by a measuring device of a ski according to the following claims that are an integral part of the present description.

In particular, the device comprises a support body provided with a contact surface for at least one portion of the base of the ski to be measured. In this sense, to perform the measurement the ski is arranged as abutment on such a contact surface.

The device further comprises measuring means of the distance of at least one sequence of points of the base of the ski from a default reference. Then, there is at least one actuator arranged above the support body so as to perform, on command, a pressure on the ski towards the contact surface in order to simulate the weight of the athlete.

According to an aspect of the invention, the actuator is rotatably coupled to the support body to vary the operating axis of the pressure on the ski.

Advantageously, therefore, with the device of the invention the detections may be made with loads on axes different from the one orthogonal to the ski in order to simulate the real use of the user. Therefore, it is sufficient to observe the skiing technique of the user and to obtain the axes of load on the skis to perform measurements in an optimized manner and to determine both the skis the use to be used and the points of ski-waxing and the amount of ski-wax to be applied. Therefore, in this sense, the device of the invention advantageously allows to perfectly customize the preparation of the ski by optimizing the performance thereof for the specific user.

Similarly, the device of the invention allows to find pairs of skis suitable for the specific user with simplicity and precision. Moreover, since each user may, even unconsciously, use a leg in a different way from the other, with different movements and different loads on the ski, the device of the invention allows to choose the most suitable ski for each leg and it further allows to customize the preparation of each ski with respect to the other on the basis of the actual use and of the actual movements of the user.

According to another aspect of the invention, the measuring means comprise at least one optical detector (preferably but not necessarily comprising a laser detector) moved along the contact surface.

In this way, advantageously, the performed measurement is particularly precise because it is continuous and not discrete. Furthermore, still advantageously, there is no mechanical contact between the measuring means and the base of the ski, thus avoiding the risk of damaging slidings.

### Brief description of the drawings

Further features and advantages of the invention will become more evident upon reading the detailed description of some preferred, but not exclusive, embodiments of a measuring device of the curvature of a ski according to the invention, shown as non-limiting example with the help of the annexed figures, wherein:
FIG. 1 represents a measuring device according to the invention in an axonometric view;
FIG. 2 represents the device of FIG. 1 in side and sectioned view.

### Detailed description of some preferred embodiments

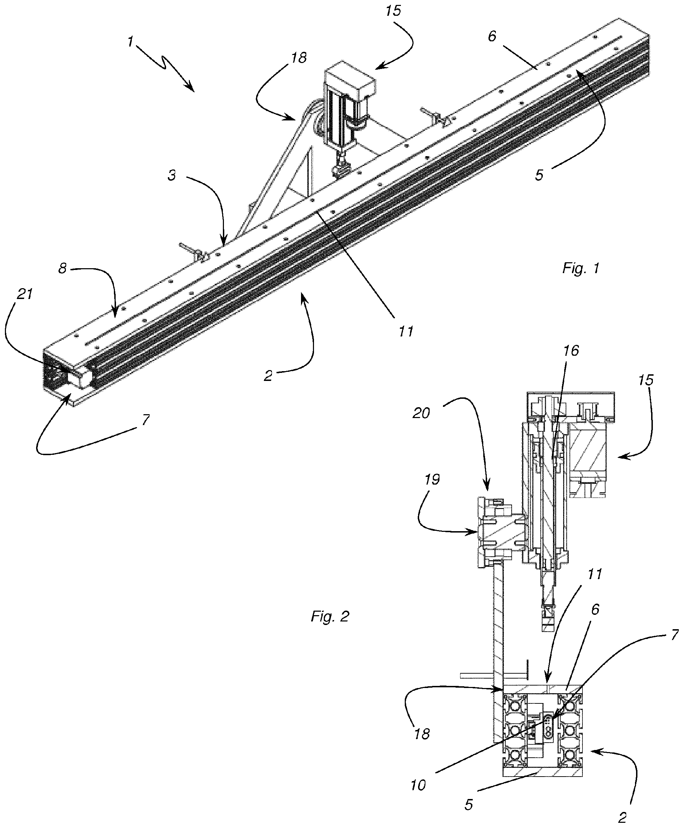

With reference to the above mentioned figures, and particularly to FIGs. 1 and 2, it is described a measuring device 1 of a ski. In particular, the device of the invention allows to measure the curvature of the ski with no loads and when it subjected to a load, as well as the load necessary to the complete flattening of the ski thereof.

Advantageously, this latter feature allows to detect the actual elasticity of the ski in order to choose the most suitable one not only for the user, but also for the type of snow whereon it is used.

According to an aspect of the invention, the device **1** comprises a support body **2** provided with a contact surface **3** whereon the ski to be measured may be arranged. In particular, one or more portions of the base of the latter are in contact with such a surface **3.**

In the embodiment that is described, the support body **2** comprises an empty section bar **5** whose upper outer surface **6** is the contact surface **3,** but such detailed features should not be considered as limitative for the present invention.

According to another aspect of the invention, the device **1** further comprises measuring means **7** of the distance of the base of the ski from a default reference **8** that, in the embodiment that is described, is the contact surface **3.** However, such a detail should not be considered as limitative for the invention since the default reference may be consist of other elements such as, for example, a suitable portion of the measuring means thereof. Moreover, the detected distance may be the distance of one or more points of the base of the ski from the default reference or the distance of each point of the base of the ski from such default reference.

In the embodiment that is described, the measuring means **7** comprise an optical detector **10** preferably, but not necessarily, consisting of a laser detector. Advantageously, this allows to perform measurements with a high degree of precision and without the need of having any element in contact with the base of the ski as it happens, instead, in case of mechanical detectors. Moreover, this last aspect allows to protect the ski and the ski-wax from possible damage due to the contact with a mechanical detector.

Moreover, the optical detectors **10** are typically of small size and thus they may be placed inside the empty section bar **5** so as to make the device of the invention **1** more compact and so as to advantageously protect the optical detector **10** thereof. In this sense, the section bar **7** has, on the upper outer surface **6,** a rectilinear groove **11** that extends along the longitudinal axis of the empty section bar **5** to allow the optical detector **10** to "see" the base of the ski.

Even such features of the device **1** of the invention should not be considered as limitative for different embodiments where, for example, the measuring means are different from a laser detector or where the arrangement thereof is not inside the empty section bar.

According to a further aspect of the invention, the measuring device **1** comprises an actuator **15** arranged above the support body **2** so as to perform, on command, a pressure on the ski towards the contact surface **3.**

Typically, the actuator **15** comprises an electrically controlled pressing plunger **16,** but such a detailed feature should not be considered as limitative for the invention. In fact, what matters is that there is a tool whereby loading the ski with a load so as to detect the new curvature that it assumes. In other words, therefore, the actuator **15** simulates the load of the user when wearing the skis.

According to another aspect of the invention, the actuator **15** is rotatably coupled to the support body **2** to vary the operating axis of the pressure on the ski. In particular, as shown in the figures, a support group **18** of the actuator **15** extends from the support body **2** so as to keep it on the contact surface **3** from the top side thereof so as the ski to be measured is interposed therein. The coupling of the actuator **15** to the support group **18** occurs by means of a rotating pivot **19** so as to allow the arrangement of the actuator **15** on axes of action different from the axis orthogonal to the contact surface **3.**

Advantageously, therefore, the actuator **15** may be rotated at will so as to modify the axis of application of the load to the ski. This, as previously mentioned, advantageously allows to simulate the actual load whereto the ski is subjected by the user thus modifying the application of the load according to an analysis of the skiing technique of the user thereof. In this sense, it is evident that the device **1** of the invention allows far more accurate measurements than what happens in the prior art where the user's peculiarities are not taken into consideration with the exception of the weight thereof.

A further advantage is the fact that, as mentioned, the device **1** of the invention allows to identify with simplicity and precision pairs of skis suitable for the specific user. Moreover, since each user may, even unconsciously, use a leg in a different way from the other, with different movements and different loading on the ski, the device **1** of the invention allows to choose the most suitable ski for each leg and allows, furthermore, to customize the preparation of each ski with respect to the other on the basis of the actual use and the actual movements of each leg of the user.

According to a further aspect of the invention, the device **1** further comprises a logic control unit not shown in the figures and operatively connected to the actuator **15** and to the measuring means **7** to detect the variation of the curvature of the ski upon the variation of the applied load and to determine not only the ski most suitable to the features of the user and of the snow, but also the ski-waxing areas and the amount of ski-wax to be applied.

Since an important aspect of the invention is to avoid human mistakes and to make as accurate as possible the measurement and the subsequent ski-waxing of the ski, according to another aspect of the invention the measuring device **1** further comprises first driving means **20** for the control of the rotation of the actuator **15** with respect to the support body **2,** and second driving means **21** to move the measuring means **7** along the contact surface **3.** Therefore, advantageously, by connecting the driving means **20** and **21** to the logic control unit it is possible to automate the entire measuring process thus optimizing the performance and the outcome.

With reference to the aforementioned, it is evident that the measuring device of a ski of the invention fulfils all the intended objects.

In particular, it allows to detect with precision the physical features of the ski, in particular the flexural stiffness and the degree of curvature, in order to determine the best ski to be used and to define the points of ski-waxing.

Moreover, it allows to properly simulate the response of the ski to the peculiar skiing of the specific user as well as to optimize the ski-waxing to be applied.

Moreover, the device of the invention allows to measure with precision the curvature of the ski without the risk of ruining the ski-wax applied.

## Claims

1. A measuring device **(1)** of a ski comprising:
- a support body **(2)** provided with a contact surface **(3)** for at least one portion of the base of the ski to be measured;
- measuring means **(7)** of the distance of at least one sequence of points of the base of the ski from a default reference **(8);**
- at least one actuator **(15)** arranged above said support body **(2)** so as to perform, on command, a pressure on the ski towards said contact surface **(3),** said actuator **(15)** being rotatably coupled to said support body **(2)** to vary the axis of operation of said pressure on the ski,
**characterized in that** said measuring means **(7)** comprise at least one optical detector (**10**) adapted to move along said contact surface **(3)** by means of second driving means (**21**) and so adapted to allow a continuous measurement and without contact with the ski.

2. Measuring device according to claim 1, **characterized in** comprising first driving means **(20)** for the control of the rotation of said actuator **(15)** with respect to said support body **(2).**

3. Measuring device according to claim 1 or 2, **characterized in that** said actuator **(15)** comprises an electrically controlled pressing plunger **(16).**

4. Measuring device according to any one of the preceding claims, **characterized in that** said optical detector **(10)** comprises at least one laser detector.

5. Measuring device according to any one of the preceding claims, **characterized in that** said default reference **(8)** consists of said contact surface **(3).**

6. Measuring device according to any one of the preceding claims, **characterized in that** said measuring means **(7)** comprise at least one laser detector **(10).**

7. Measuring device according to any one of the preceding claims, **characterized in** comprising second driving means **(21)** to move said measuring means **(7)** along said contact surface **(3).**

8. Measuring device according to any one of the preceding claims, **characterized in that** said support body **(2)** comprises an empty section bar **(5).**

9. Measuring device according to claim 7, **characterized in that** said contact surface **(3)** consists of the upper surface **(6)** of said empty section bar **(5).**

10. Measuring device according to any one of the preceding claims, **characterized in** comprising a logic control unit operatively connected at least to said actuator **(15)** and to said measuring means **(7).**

## Patentansprüche

1. Messvorrichtung (1) eines Skis, umfassend:
- einen Trägerkörper (2), der mit einer Kontaktfläche (3) für wenigstens einen Abschnitt der zu messenden Grundfläche des Skis versehen ist;
- Messmittel (7) des Abstandes von wenigstens einer Folge von Punkten der Grundfläche des Skis von einem Voreinstellungsbezug (8);
- wenigstens einen über dem Trägerkörper (2) angeordneten Aktuator (15), um auf Befehl einen Druck auf den Ski in Richtung auf die Kontaktfläche (3) hin auszuführen, wobei der Aktuator (15) drehbar mit dem Trägerkörper (2) verbunden ist, um die Arbeitsachse des Drucks auf den Ski zu variieren,
**dadurch gekennzeichnet, dass** die Messmittel (7) wenigstens einen optischen Detektor (10) aufweisen, der zur Bewegung entlang der Kontaktfläche (3) mittels eines zweiten Antriebsmittels (21) ausgelegt und so angepasst ist,
um eine kontinuierliche Messung und dies ohne Kontakt mit dem Ski zu ermöglichen.

2. Messvorrichtung nach Anspruch 1, **gekennzeichnet durch** ein erstes Antriebsmittel (20) zur Steuerung der Drehung des Aktuators (15) in Bezug auf den Trägerkörper (2).

3. Messvorrichtung nach Anspruch 1 oder 2, **dadurch gekennzeichnet, dass** der Aktuator (15) einen elektrisch gesteuerten Druckstempel (16) aufweist.

4. Messvorrichtung nach einem der vorhergehenden Ansprüche, **dadurch gekennzeichnet, dass** der optische Detektor (10) wenigstens einen Laserdetektor umfasst.

5. Messvorrichtung nach einem der vorhergehenden Ansprüche, **dadurch gekennzeichnet, dass** der Voreinstellungsbezug (8) aus der Kontaktfläche (3) besteht.

6. Messvorrichtung nach einem der vorhergehenden Ansprüche, **dadurch gekennzeichnet, dass** die Messmittel (7) wenigstens einen Laserdetektor (10) aufweisen.

7. Messvorrichtung nach einem der vorhergehenden Ansprüche, **dadurch gekennzeichnet, dass** sie zweite Antriebsmittel (21) umfasst, um die Messmittel (7) entlang der Kontaktfläche (3) zu bewegen.

8. Messvorrichtung nach einem der vorhergehenden Ansprüche, **dadurch gekennzeichnet, dass** der Trägerkörper (2) einen leeren Profilstab (5) aufweist.

9. Messvorrichtung nach Anspruch 7, **dadurch gekennzeichnet, dass** die Kontaktfläche (3) aus der oberen Fläche (6) des leeren Profilstabs (5) besteht.

10. Messvorrichtung nach einem der vorhergehenden Ansprüche, **dadurch gekennzeichnet, dass** sie wenigstens eine Logiksteuereinheit umfasst, die wenigstens mit dem Aktuator (15) und mit den Messmitteln (7) betriebsbereit verbunden ist.

## Revendications

1. Dispositif de mesure (1) d'un ski, comprenant :
- un corps de support (2) pourvu d'une surface de contact (3) pour au moins une portion de la base du ski destiné à être mesuré ;
- des moyens de mesure (7) de la distance d'au moins une séquence de points de la base du ski à partir d'une référence par défaut (8) ;
- au moins un actionneur (15) agencé au-dessus dudit corps de support (2) afin d'effectuer, sur commande, une pression sur le ski vers ladite surface de contact (3), ledit actionneur (15) étant accouplé de façon rotative audit corps de support (2) pour varier l'axe d'opération de ladite pression sur le ski,
**caractérisé en ce que** lesdits moyens de mesure (7) comprennent au moins un détecteur optique (10) adapté pour se déplacer le long de ladite surface de contact (3) au moyen de seconds moyens d'entraînement (21) et donc adapté pour permettre une mesure continue et sans contact avec le ski.

2. Dispositif de mesure selon la revendication 1, **caractérisé en ce qu'**il comprend des premiers moyens d'entraînement (20) pour la commande de la rotation dudit actionneur (15) par rapport audit corps de support (2).

3. Dispositif de mesure selon la revendication 1 ou 2, **caractérisé en ce que** ledit actionneur (15) comprend un piston plongeur de pression commandé électriquement (16).

4. Dispositif de mesure selon l'une quelconque des revendications précédentes, **caractérisé en ce que** ledit détecteur optique (10) comprend au moins un détecteur laser.

5. Dispositif de mesure selon l'une quelconque des revendications précédentes, **caractérisé en ce que** ladite référence par défaut (8) est constituée de ladite surface de contact (3).

6. Dispositif de mesure selon l'une quelconque des revendications précédentes, **caractérisé en ce que** lesdits moyens de mesure (7) comprennent au moins un détecteur laser (10).

7. Dispositif de mesure selon l'une quelconque des revendications précédentes, **caractérisé en ce qu'**il comprend des seconds moyens d'entraînement (21) pour déplacer lesdits moyens de mesure (7) le long de ladite surface de contact (3).

8. Dispositif de mesure selon l'une quelconque des revendications précédentes, **caractérisé en ce que** ledit corps de support (2) comprend une barre à section vide (5).

9. Dispositif de mesure selon la revendication 7, **caractérisé en ce que** ladite surface de contact (3) est constituée de la surface supérieure (6) de ladite barre à section vide (5).

10. Dispositif de mesure selon l'une quelconque des revendications précédentes, **caractérisé en ce qu'**il comprend une unité de commande logique fonctionnellement connectée au moins audit actionneur (15) et auxdits moyens de mesure (7).
